# DEMANDE DE BREVET EUROPEEN

(11) **EP 1 655 213 A2**
(43) Date de publication de la demande: **10.05.2006**
(21) Numéro de dépôt: 05300883.5
(22) Date de dépôt: 31.10.2005
(51) Int. Cl.: B62H 3/04

(54) **Dispositif antivol de maintien en stationnement d'un véhicule à deux roues**

(30) Priorité: 08.11.2004 FR 0452557
(71) Demandeur: LAQUIEZE, Alain, 15140 BESSE (FR); CHOULOVA, Larissa, Kazan Tatarstan 45 (RU)
(72) Inventeur: Lacquieze, Alain M., 15140 Besse (FR); Choulova, Larissa, 420095 Kazan (Tatarstan) (RU)
(74) Mandataire: Rhein, Alain

(57) **Abrégé**

Dispositif antivol de maintien en stationnement d'un véhicule à deux roues.

Il comprend d'une part des moyens de logement (2, 3, 4) aptes à loger l'une des roues (5) du véhicule, en s'étendant de part et d'autre et éventuellement au-dessus de la roue (5) pour en envelopper plus que la moitié en sorte de rendre son moyeu (50) inaccessible ; et d'autre part, intérieurement aux moyens de logement (2, 3, 4), des moyens (6) aptes à saisir par crochetage la roue (5).

## Description

La présente invention a pour objet un dispositif antivol de maintien en stationnement d'un véhicule à deux roues.

De manière traditionnelle le stationnement des véhicules à deux roues, qu'ils soient motorisés ou non, est réalisé au travers soit de moyens propres tels que des béquilles, soit de structures permettant une prise d'appui par coincement d'une roue par exemple, tandis que la fonction antivol est assurée par une chaîne ou analogue fermée par un moyen de fermeture de type cadenas.

Les moyens utilisés présentent l'inconvénient d'être peu efficaces. En effet, un véhicule à deux roues non relié fixement à une structure peut facilement être enlevé sans avoir à se soucier de son système antivol qui pourra être enlevé ultérieurement, et s'il est fixé à une structure par l'intermédiaire d'une roue, il peut être aisé de démonter ladite roue et d'enlever le reste du véhicule, ou bien, selon le matériel utilisé par le voleur, de sectionner le système antivol.

Par ailleurs, pour la plupart des dispositifs actuels il subsiste le risque de chute des véhicules, ce qui peut occasionner, outre des dégâts audits véhicules, des blessures à des passants.

Pour pallier ces inconvénients il a été proposé différents dispositifs destinés à permettre un stationnement sécurisé des véhicules à deux roues. Les plus efficaces sont ceux qui se présentent sous la forme d'un coffre fermé par une porte équipée d'une serrure et qui est apte à contenir un véhicule. Ces dispositifs, tels que ceux décrits par exemple dans les documents FR 2.762.343 et FR 2.764.261, présentent l'inconvénient, outre d'un encombrement important, d'être inesthétiques.

D'autres ont proposé des dispositifs permettant de saisir le véhicule à deux roues par une autre partie qu'une roue, et plus particulièrement par le cadre comme par exemple celui décrit dans le document WO 97/30884. Un tel dispositif est toutefois limité à n'être utilisable qu'avec une certaine forme de véhicule à deux roues, et plus particulièrement des bicyclettes dont le cadre présente une certaine architecture et notamment une barre horizontale.

D'autres ont proposé, comme dans le document CH 683 248, un dispositif antivol comprenant d'une part des moyens de logement aptes à accueillir la roue avant d'une bicyclette, et d'autre part, solidaire desdits moyens de logement, des moyens d'accrochage, de type chaîne ou câble, permettant d'enserrer une autre partie de ladite bicyclette. Outre l'encombrement d'un tel dispositif, les moyens d'accrochage sont de type classique et peuvent être forcés de la même manière.

On connaît également, par le document JP 2004 001657 un dispositif antivol permettant de pincer la roue d'une bicyclette, si il permet d'immobiliser une roue, il ne peut pas empêcher de séparer de cette dernière le reste de la bicyclette.

La présente invention a pour but de proposer un dispositif antivol de maintien en stationnement d'un véhicule à deux roues, permettant de remédier aux divers inconvénients précités.

Le dispositif antivol de maintien en stationnement d'un véhicule à deux roues selon l'invention se caractérise essentiellement en ce qu'il comprend d'une part des moyens de logement aptes à loger l'une des roues dudit véhicule en s'étendant de part et d'autre pour en envelopper plus que la moitié en sorte de rendre son moyeu inaccessible ; et d'autre part, intérieurement auxdits moyens de logement, des moyens aptes à saisir par crochetage ladite roue et/ou une partie du cadre dudit véhicule.

Selon une caractéristique additionnelle du dispositif selon l'invention, le moyen de saisissement par crochetage est associé à un moyen butoir disposé intérieurement aux moyens de logement de ladite roue, qui est apte à être repoussé par ladite roue lors de l'introduction de celle-ci dans lesdits moyens de logement, et dont le déplacement sous la poussée de ladite roue est apte à déclencher le fonctionnement dudit moyen de saisissement.

Selon une autre caractéristique additionnelle du dispositif selon l'invention, le moyen butoir est équipé d'un système à crémaillère et à cliquet de blocage, associé à un moyen de déblocage, avec lequel il coopère lors de son déplacement sous la poussée de la roue.

Selon une autre caractéristique additionnelle du dispositif selon l'invention, le moyen de déblocage est associé à un monnayeur et/ou à un moyen de codage.

Selon une autre caractéristique additionnelle du dispositif selon l'invention, le moyen de saisissement par crochetage comprend au moins une pièce mobile apte à être déplacée transversalement par rapport à la roue du véhicule en sorte la traverser entre la jante et le moyeu.

Selon une autre caractéristique additionnelle du dispositif selon l'invention, il comprend des moyens permettant d'empêcher le soulèvement du véhicule.

Le moyen de saisissement par crochetage peut être ce moyen, selon son positionnement dans le dispositif, et donc l'endroit où est réaliser le crochetage.

Selon une autre caractéristique additionnelle du dispositif selon l'invention, les moyens aptes à loger la roue consistent en deux parois sensiblement verticales et parallèles, entre lesquelles est ménagé un espace permettant l'introduction de ladite roue, tandis qu'une paroi horizontale s'étend au-dessus dudit espace et relie lesdites deux parois.

Selon un mode de réalisation particulier du dispositif selon l'invention, le moyen de saisissement par crochetage consiste en une mâchoire dont les deux mors sont aptes à se refermer autour de la jante de la roue.

Selon un autre mode de réalisation particulier du dispositif selon l'invention, le moyen de saisissement par crochetage consiste en un crochet apte à se déployer pour traverser la roue de préférence entre des éléments du cadre.

Selon une forme de réalisation particulière du dispositif selon l'invention, les moyens aptes à loger la roue consistent en deux parois sensiblement verticales et parallèles, entre lesquelles est ménagé un espace permettant l'introduction de ladite roue, et dont au moins une partie de celles-ci est mobile en déplacement, en rapprochement ou en éloignement, en sorte d'adapter la largeur dudit espace à l'épaisseur de ladite roue.

Les avantages et les caractéristiques du dispositif selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique de profil et en coupe d'un dispositif antivol selon l'invention avant utilisation.
- la figure 2 représente une vue schématique de profil et en coupe du même dispositif en cours d'utilisation.
- la figure 3 représente une vue schématique de dessus et en coupe du dispositif tel que représenté sur la figure 1.
- la figure 4 représente une vue schématique de dessus et en coupe du dispositif tel que représenté sur la figure 2.
- la figure 5 représente une vue schématique partielle de profil d'un autre mode de réalisation du dispositif antivol selon l'invention.
- la figure 6 représente une vue schématique de face du même dispositif.

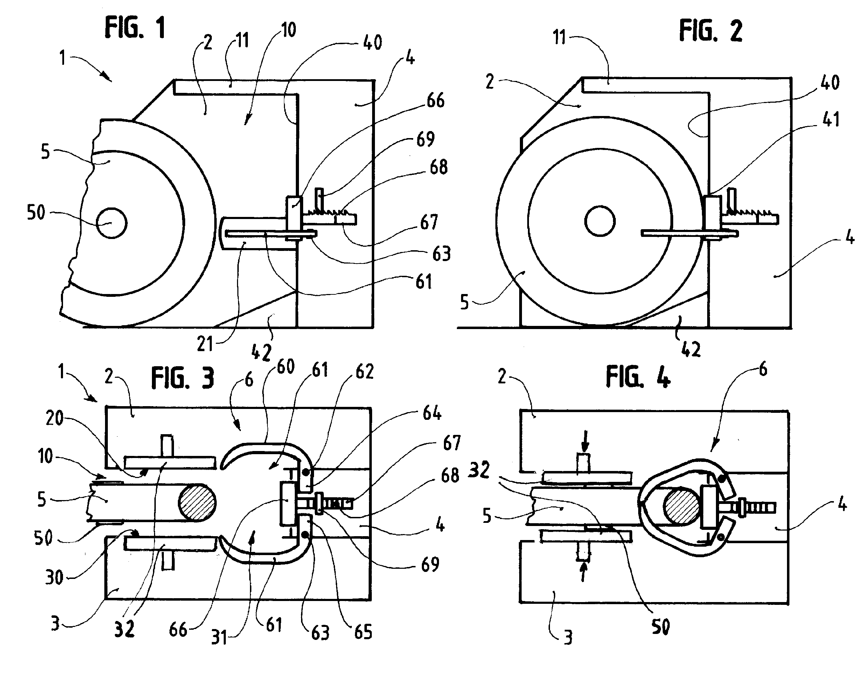

En référence aux figures 1, 2, 3 et 4, on peut voir un dispositif 1 antivol de maintien en stationnement d'un véhicule à deux roues selon l'invention.

Ce dispositif 1 se présente sous la forme d'une structure comprenant essentiellement deux caissons verticaux parallèles 2 et 3 reliés par un caisson arrière 4, et délimitant un espace central 10 d'une largeur permettant l'introduction d'une roue 5 de véhicule à deux roues.

Les dimensions des caissons 2, 3 et 4, et notamment celles de leurs parois internes, respectivement 20, 30 et 40, qui délimitent l'espace 10, sont choisies en sorte que la roue 5 puisse loger dans cet espace 10 au-delà de son moyeu 50, afin que ce dernier y soit caché et ne puisse pas être atteint pour démonter frauduleusement la roue 5. A cet effet, la largeur de l'espace 10 doit être juste suffisante au passage de cette roue 5.

On notera que le dispositif antivol 1 tel que représenté comporte également une paroi supérieure 11, qui s'étend au-dessus de l'espace 10 et qui relie les deux caissons 2 et 3. Cette paroi 11 permet d'accroître l'inaccessibilité à la roue 5.

Le dispositif antivol 1 est équipé d'un mécanisme de saisissement par crochetage de la roue 5, qui dans ce mode de réalisation se présente sous la forme d'une mâchoire 6 comprenant deux mors 60 et 61 articulés au niveau du caisson 4 et aptes à s'extraire des caissons, respectivement 2 et 3, en passant par des ouvertures, respectivement 21 et 31, pratiquées dans les parois, respectivement 20 et 30, pour se refermer dans l'espace 10.

Dans le mode de réalisation représenté les mors 60 et 61 sont indépendants, chacun monté en libre pivotement sur un axe vertical, respectivement 62 et 63, les parties non-actives, respectivement 64 et 65, des mors 60 et 61 s'étendant entre ces axes 62 et 63.

Comme on peut le voir plus précisément sur les figures 2 et 4, le mécanisme comprend également un système de déclenchement de la fermeture des mors 60 et 61. Ce système de déclenchement comprend un butoir 66 solidaire de l'extrémité d'une coulisse 67, mobile en translation horizontale et qui traverse la paroi 40 du caisson 4 par une ouverture 41. Le butoir 66 qui au repos, c'est-à-dire hors utilisation du dispositif antivol 1, fait saillie dans l'espace 10, peut être repoussé dans le caisson 4 par la roue 5 lors de l'introduction de celle-ci dans l'espace 10. Lors de la rentrée du butoir 66 dans le caisson 4, il provoque le pivotement en fermeture des mors 60 et 61, en venant prendre appui sur les parties non-actives 64 et 65.

La coulisse 67 est par ailleurs munie d'une crémaillère 68 qui coopère avec un cliquet 69, permettant de la bloquer lorsqu'elle est en position rentrée, et ainsi immobiliser les mors en position refermée. Le cliquet 69 est associé à un moyen de déblocage non représenté, lui-même associé à un monnayeur et/ou à un moyen de codage.

Le dispositif antivol selon l'invention permet ainsi d'immobiliser une roue d'un véhicule à deux roues, tout en empêchant que puisse être démontée cette roue.
On notera que le mode de réalisation du dispositif selon l'invention représenté sur les figures 1, 2, 3 et 4, est plus particulièrement destiné au stationnement des véhicules à deux roues motorisés tels que les scooters, motos et similaires.

On notera la présence au pied de la paroi 40, d'un plan incliné 42, sur lequel peuvent rouler et s'élever les roues de plus petits diamètres, en sorte de leur faciliter l'accès à la mâchoire 6.

On notera également que de manière avantageuse, du point de vue construction, il est prévu que l'ensemble du mécanisme de saisissement constitue un bloc désolidarisable du dispositif, afin de permettre son enlèvement et son remplacement par un autre pour des raisons de maintenance.

Dans ce mode de réalisation, chacune des parois 30 consiste en la face interne d'une plaque 31 mobile en déplacement en sorte de permettre la variation de la largeur de l'espace 10 et son adaptation à l'épaisseur de la roue 5.

Ces plaques 32 peuvent être mues, par exemple, par des vérins, non représentés, et commandés par le déplacement du butoir 66. Ces plaques 32 peuvent ainsi venir au contact du moyeu 50, de préférence sans exercer de pression sur celui-ci, en utilisant par exemple des capteurs de pression qui permettent de commander l'arrêt du déplacement et le maintien en position.

On notera que les plaques 32 peuvent de préférence présenter une forme concave, en sorte de favoriser un recouvrement du moyeu 50.

Les plaques 32 sont ainsi amenées au plus près du moyeu 50, quelle que soit la taille et la nature de celle-ci. Il est donc possible de prévoir un espace 10 initial de grande largeur, pour pouvoir accueillir aussi bien des bicyclettes, que des scooters et même des motos.

Par ailleurs, du fait de cette possibilité de rétrécissement au plus juste de l'espace 10, il peut être envisagé de s'affranchir d'une paroi horizontale 11, rendant ainsi l'ensemble du dispositif antivol plus compact.

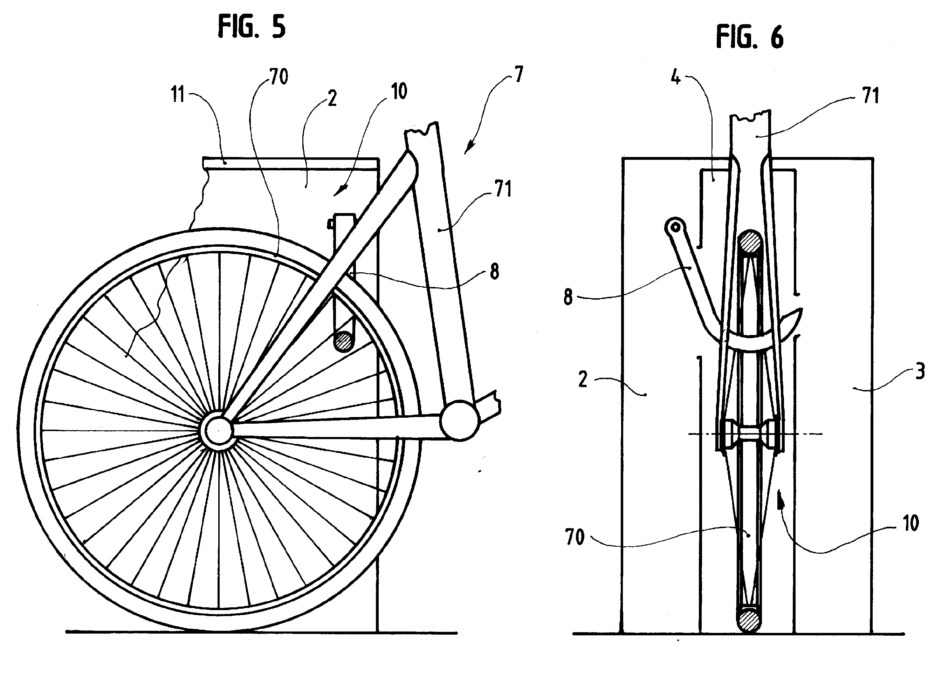

En référence maintenant aux figures 5 et 6, on peut voir un autre mode de réalisation du dispositif selon l'invention, plus particulièrement destiné au stationnement d'une bicyclette 7.

Comme cela est visible sur la figure 6, le dispositif comprend également trois caissons 2, 3 et 4 qui délimitent, avec une paroi supérieure 11 un espace 10 destiné à recevoir la roue 70 de la bicyclette 7, qui est de préférence la roue arrière.

Le mécanisme de saisissement par crochetage de la roue 70 comprend un crochet 8, apte à se déployer dans l'espace 10 en traversant la paroi 20 pour se bloquer au niveau de la paroi 30, après avoir traversé la roue 70, de préférence entre des éléments du cadre 71.

Le déploiement du crochet 8 peut être réalisé au travers d'un moyen, non représenté, analogue à celui utilisé dans le premier mode de réalisation, à savoir un élément de butée contre lequel la roue 70 est destinée à venir prendre appui pour entraîner, par l'intermédiaire de moyens de renvoi d'angle, le pivotement du crochet 8.

Le dispositif peut par ailleurs comporter des accessoires tels que par exemple un coffre destiné au rangement d'objets tels que casque ou les gants de l'utilisateur, le verrouillage de ce coffre étant réalisé simultanément au manoeuvrement de l'antivol.

## Revendications

1. Dispositif antivol de maintien en stationnement d'un véhicule à deux roues **caractérisé en ce qu'**il comprend d'une part des moyens de logement (2, 3, 4) aptes à loger l'une des roues (5 ; 70) dudit véhicule, en s'étendant de part et d'autre et au-dessus de ladite roue (5 ; 70) pour en envelopper plus que la moitié en sorte de rendre son moyeu (50) inaccessible ; et d'autre part, intérieurement auxdits moyens de logement (2, 3, 4), des moyens (6 ; 8) aptes à saisir par crochetage ladite roue (5 ; 70) et/ou une partie du cadre (71) dudit véhicule.

2. Dispositif antivol selon la revendication 1, **caractérisé en ce que** le moyen de saisissement par crochetage (6 ; 8) est associé à un moyen butoir (66) disposé intérieurement aux moyens de logement (2, 3, 4) de ladite roue (5 ; 70), qui est apte à être repoussé par ladite roue (5 ; 70) lors de l'introduction de celle-ci dans lesdits moyens de logement (2, 3, 4), et dont le déplacement sous la poussée de ladite roue (5 ; 70) est apte à déclencher le fonctionnement dudit moyen de saisissement (6 ; 8).

3. Dispositif antivol selon la revendication 2, **caractérisé en ce que** le moyen butoir (66) est équipé d'un système à crémaillère (68) et à cliquet de blocage (69) associé à un moyen de déblocage avec lequel il coopère lors de son déplacement sous la poussée de la roue (5 ; 70).

4. Dispositif antivol selon la revendication 3, **caractérisé en ce que** le moyen de déblocage est associé à un monnayeur et/ou à un moyen de codage.

5. Dispositif antivol selon l'une quelconque des revendications précédentes, **caractérisé en ce que** le moyen de saisissement de par crochetage (6 ; 8) comprend au moins une pièce mobile (60) apte à être déplacée transversalement par rapport à la roue du véhicule (5 ; 70) en sorte la traverser entre la jante et le moyeu (50).

6. Dispositif antivol selon l'une quelconque des revendications précédentes, **caractérisé en ce qu'**il comprend des moyens permettant d'empêcher le soulèvement du véhicule.

7. Dispositif antivol selon l'une quelconque des revendications précédentes, **caractérisé en ce que** les moyens aptes à loger la roue (5 ; 70) consistent en deux parois (20, 30) sensiblement verticales et parallèles, entre lesquelles est ménagé un espace (10) permettant l'introduction de ladite roue (5 ; 70), tandis qu'une paroi horizontale (11) s'étend au-dessus dudit espace (10) et relie lesdites deux parois (20, 30).

8. Dispositif antivol selon l'une quelconque des revendications 1 à 6, **caractérisé en ce que** les moyens aptes à loger la roue (5 ; 50) consistent en deux parois (30) sensiblement verticales et parallèles, entre lesquelles est ménagé un espace (10) permettant l'introduction de ladite roue (5 ; 50), et dont au moins une partie (31) de celles-ci est mobile en déplacement, en rapprochement ou en éloignement, en sorte d'adapter la largeur dudit espace (10) à l'épaisseur de ladite roue (5 ; 50).

9. Dispositif antivol selon l'une quelconque des revendications précédentes, **caractérisé en ce que** le moyen de saisissement par crochetage consiste en une mâchoire (6) dont les deux mors (60) sont aptes à se refermer autour de la jante de la roue (5).

10. Dispositif antivol selon l'une quelconque des revendications 1 à 8, **caractérisé en ce que** le moyen de saisissement par crochetage consiste en un crochet (8) apte à se déployer pour traverser la roue (70) de préférence entre des éléments du cadre (71).
